# EUROPEAN PATENT APPLICATION

(11) **EP 4 415 090 A1**
(43) Date of publication of application: **14.08.2024**
(21) Application number: 23197369.4
(22) Date of filing: 14.09.2023
(51) Int. Cl.: H01M 10/04, H01M 50/105, H01M 50/119, H01M 50/55

(54) **RECHARGEABLE BATTERY**

(30) Priority: 08.02.2023 KR 20230016975
(71) Applicant: Samsung SDI Co., Ltd., Yongin-si, Gyeonggi-do 17084 (KR)
(72) Inventor: LEE, Jeawoan, 17084 Yongin-si (KR); CHEONG, Kwangjo, 17084 Yongin-si (KR); RO, Daesung, 17084 Yongin-si (KR); LEE, Misun, 17084 Yongin-si (KR)
(74) Representative: Marks & Clerk LLP

(57) **Abstract**

An embodiment provides a rechargeable battery including: a stacked type electrode assembly in which a negative electrode plate and a positive electrode plate with electrode tabs are stacked on both outer sides of a separator; a pouch that accommodates the electrode assembly; a first film member that generates adhesive force through an electrolyte solution and is attached to the electrode assembly in a bent and connected state to both outer surfaces and side surfaces of an outer periphery of the electrode assembly; and a second film member that is spaced apart from the first film member to be attached to at least one of the both outer surfaces.

## Description

### BACKGROUND OF THE INVENTION

### (a) Field of the Invention

The present disclosure relates to a rechargeable battery, and more particularly, to a rechargeable battery that may control a falling flow of an electrode assembly.

### (b) Description of the Related Art

A rechargeable battery is a battery that is repeatedly charged and discharged, unlike a primary battery. A small capacity rechargeable battery is used in a small portable electronic device such as a mobile phone, a notebook computer, and a camcorder, while a large capacity rechargeable battery may be used as a power source for driving a motor of a hybrid vehicle and an electric vehicle.

For example, the rechargeable battery includes an electrode assembly for charging and discharging, a pouch accommodating the electrode assembly, and an electrode tab that electrically connects the electrode assembly and draws it out of the pouch. The electrode assembly includes a winding type in which a negative electrode plate and a positive electrode plate are wound with a separator interposed therebetween, and a stacking type in which a negative electrode plate and a positive electrode plate are stacked with a separator interposed therebetween.

Pouch cells are mainly used in mobile electronic devices. Therefore, due to negligence in handling or other factors, the pouch cell may frequently fall. An internal short circuit caused by the falling may stop the operation of the electronic device or lead to ignition of the electronic device, causing significant damage to human life or property.

There is a method of applying tape to solve the falling problem. When the falling impact strength increases, that is, when the weight of the cell increases or the falling height and frequency increase, a pull-back phenomenon occurs in which the separator comes out backward due to the falling of the electrode assembly. Due to the pull-back phenomenon, the electrode substrate or the electrode composite is exposed to the outside, which causes an internal short circuit.

### SUMMARY OF THE INVENTION

The present disclosure is to provide a rechargeable battery that may control the falling flow of an electrode assembly. The present disclosure is to provide a rechargeable battery that may prevent the pull-back phenomenon of the electrode assembly even when the falling impact strength is high.

The present disclosure is to provide a rechargeable battery that may improve flatness between a pouch and an oriented polystyrene (OPS) film while controlling a pull-back phenomenon of a separator by applying the OPS film. The present disclosure is to provide a rechargeable battery that may prevent a problem caused by falling flow by increasing a contact area between a pouch and an OPS film.

An embodiment provides a rechargeable battery including: a stacked type electrode assembly in which a negative electrode plate and a positive electrode plate with electrode tabs are stacked on both surfaces of a separator; a pouch that accommodates the electrode assembly; a first film member that generates adhesive force through an electrolyte solution and is attached to the electrode assembly in a bent and connected state to both outer surfaces and side surfaces of an outer periphery of the electrode assembly; and a second film member that is spaced apart from the first film member and attached to at least one of the both outer surfaces.

The first film member and the second film member may be made of an oriented polystyrene (OPS) film.

The negative electrode plate and the positive plate may have a plane area in first and second directions crossing each other and are stacked in a third direction crossing the plane area; the electrode tab may be drawn out of the pouch along the first direction; and the first film member may be provided on both sides of the first direction and both sides of the second direction, respectively of the electrode assembly.

The first film member may include a pair of first-direction films that are stretched and adhered on both sides of the second direction in the first direction, and a second-direction film that is stretched and attached in the second direction between the pair of first direction films on a side opposite to a drawing direction of the electrode tab.

The second-direction film may be divided and attached along the second direction between the pair of first-direction films.

The second-direction film may further include a film between tabs attached between the electrode tabs.

The second film member may be attached to at least one of the both outer surfaces, between the pair of first-direction films and on one side of the second-direction film.

The first film member and the second film member may closely adhere to an inner surface of the pouch.

The first film member may have a first thickness, and the second film member may have a second thickness that is twice the first thickness and may be attached to one of the both outer surfaces of the electrode assembly.

The first thickness may be 24 µm to 34 µm, and the second thickness may be 51 µm to 61 µm.

The first film member may have a first thickness, and the second film member may have the first thickness and may be attached to the both outer surfaces of the electrode assembly.

The first film member may have a first area A1, the second film member may have a second area A2, and the first area A1 may be 60 to 80% of the second area A2 [A1=(0.6-0.8)*A2].

The first film member may include a pair of second-direction films that are stretched and adhered on both sides of the first direction of the electrode assembly in the second direction, and a first-direction film that is stretched and attached in the first direction between the pair of second direction films.

Among the pair of second-direction films, the second direction film on the electrode tab side may be provided with a pair of through-holes through which the electrode tabs are respectively drawn out.

The pair of second-direction films may be entirely attached to the both outer surfaces and the side surfaces in the second direction.

The first film member may have a first area A21, the second film member may have a second area A22, and the first area A21 may be 90 to 110% of the second area A22 [A21=(0.9-1.1)*A22].

The rechargeable battery may further include a binder layer applied to the both outer surfaces of the electrode assembly, wherein the first film member and the second film member may be attached on the binder layer.

At least some of the above and other features of the invention are set out in the claims.

It is possible to control the falling flow and pull-back in the electrode assembly by attaching both outer surfaces and side surfaces of the stack-type electrode assembly with the first film member, it is possible to improve the flatness of the first film member and the electrode assembly because the second film member is attached to both outer surfaces or one outer surface of the electrode assembly, and it is possible to increase a contact area between the first and second film members and the pouch.

### BRIEF DESCRIPTION OF THE DRAWINGS

FIG. 1 illustrates a perspective view of a rechargeable battery according to a first embodiment of the present invention.
FIG. 2 illustrates an exploded perspective view of FIG. 1.
FIG. 3 illustrates a top plan view of an electrode assembly applied to FIG. 2.
FIG. 4 illustrates a cross-sectional view taken along line IV-IV of FIG. 3.
FIG. 5 illustrates a top plan view of an electrode assembly of a rechargeable battery according to a second embodiment of the present disclosure.
FIG. 6 illustrates a side view viewed from positive and negative tab sides of FIG. 5.
FIG. 7 illustrates a top plan view of an electrode assembly of a rechargeable battery according to a third embodiment of the present disclosure.
FIG. 8 illustrates a cross-sectional view taken along line VIII-VIII of FIG. 7.

### DETAILED DESCRIPTION OF THE EMBODIMENTS

The present disclosure will be described more fully hereinafter with reference to the accompanying drawings, in which embodiments of the invention are shown. As those skilled in the art would realize, the described embodiments may be modified in various different ways, all without departing from the scope of the present disclosure. The drawings and description are to be regarded as illustrative in nature and not restrictive. Like reference numerals designate like elements throughout the specification.

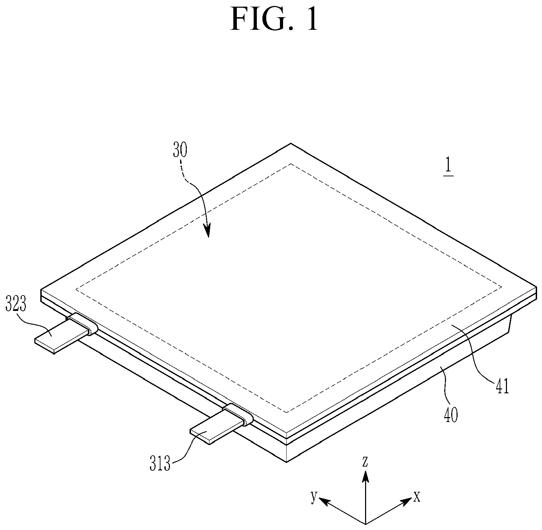

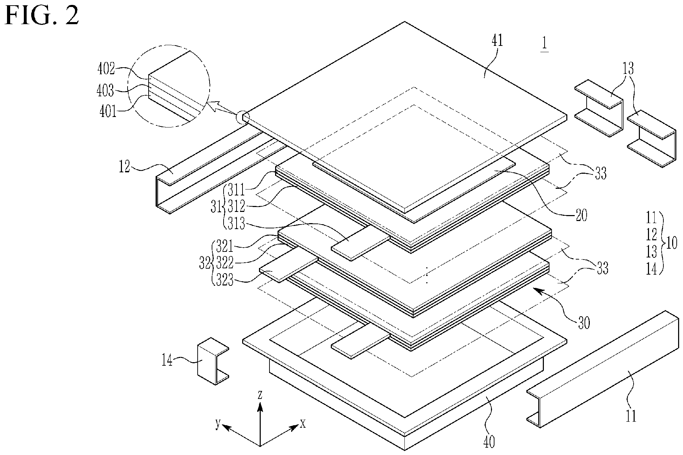

FIG. 1 illustrates a perspective view of a rechargeable battery according to a first embodiment of the present invention, and FIG. 2 illustrates an exploded perspective view of FIG. 1.

Referring to FIG. 1 and FIG. 2, a rechargeable battery 1 of the first embodiment includes an electrode assembly 30, a pouch 40 accommodating the electrode assembly 30, and a first film member 10 and a second film member 20 attached to the electrode assembly 30.

The electrode assembly 30 includes a separator 33, and a first electrode plate 31 and a second electrode plate 32 formed as single sheets on both surfaces of the separator 33. That is, the electrode assembly 30 includes a plurality of the first electrode plate 31 and the second electrode plate 32 alternately disposed between a plurality of separators 33.

As an example, the first electrode plate 31 is a positive electrode plate, and includes a positive electrode active material layer 312 on both surfaces of an electrode current collecting plate 311. The first electrode plate 31 includes an electrode tab 313 of an uncoated region protruding to one side. The electrode tab 313 is directly drawn out of the pouch 40, or is connected to a lead tab (not shown) and drawn out of the pouch 40.

The second electrode plate 32 is a negative electrode plate and includes negative electrode active material layers 322 on both surfaces of an electrode current collecting plate 321. The second electrode plate 32 includes an electrode tab 323 of an uncoated region protruding to one side. The electrode tab 323 is directly drawn out of the pouch 40, or is connected to a lead tab (not shown) and drawn out of the pouch 40.

The positive electrode plate 31 and the negative electrode plate 32 have a planar area in a first direction (x-axis direction) and a second direction (y-axis direction) crossing each other, and are stacked in a third direction (z-axis direction) crossing the planar area. The electrode tabs 313 and 323, that is, the positive electrode tab 313 and the negative electrode tab 323 are spaced apart from each other along the second direction, and are drawn out of the pouch 40 along the first direction.

For example, the pouch 40 and a cover 41 may be formed to include a polymer sheet 401 that forms an inner surface and acts as electrical insulation and thermal bonding, a nylon sheet 402 that forms an outer surface and acts as protection, and an aluminium sheet 403 providing mechanical strength.

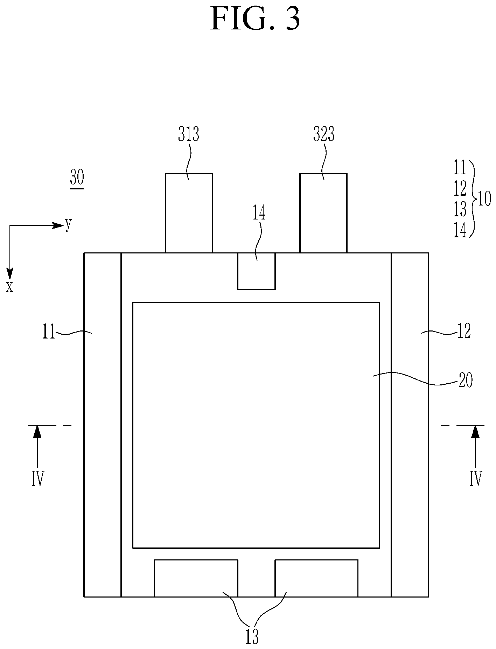

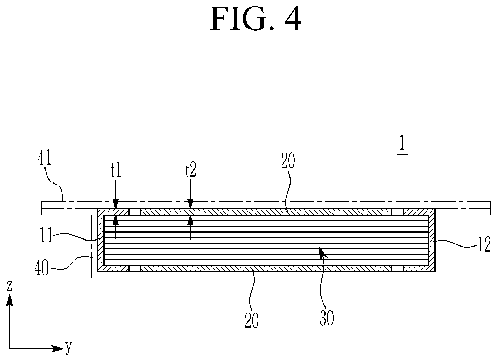

FIG. 3 illustrates a top plan view of an electrode assembly applied to FIG. 2, and FIG. 4 illustrates a cross-sectional view taken along line IV-IV of FIG. 3.

Referring to FIG. 2 to FIG. 4, the first film member 10 generates adhesive force through electrolyte solution and is attached to the electrode assembly 30 in a bent and connected state to both outer surfaces and side surfaces of the outer periphery of the electrode assembly 30.

The first film member 10 surrounds both outer surfaces and side surfaces of the outer periphery of the electrode assembly 30, thereby controlling the falling flow of the electrode assembly 30, and the first film member 10 prevents the pull-back phenomenon the electrode assembly 30 in which the separator 33 comes out backward even when the falling impact is high.

The second film member 20 generates adhesive force through electrolyte solution, and is spaced apart from the first film member 10 and attached to one or both of the outer surfaces of the electrode assembly 30. The second film member 20 overcomes the decrease in flatness of the first film member 10 and the electrode assembly 30 due to the use of the first film member 10, so it increases the contact area between the first and second film members 10 and 20 and the inner surface of the pouch 40. As described above, since the first and second film members 10 and 20 attached to the electrode assembly 30 come into contact with the inner surface of the pouch 40 in a large area, the falling flow of the electrode assembly 30 may be further controlled.

For example, the first film member 10 and the second film member 20 are made of an oriented polystyrene (OPS) film. The first film member 10 and the second film member 20 generate adhesive force through the electrolyte solution accommodated in the pouch 40.

The first film member 10 is provided on both sides of the first direction (x-axis direction) and both sides of the second direction (y-axis direction), respectively of the electrode assembly 30. As an example, the first film member 10 includes a pair of first-direction films 11 and 12 stretched and attached (for example, adhered) on both sides of the second direction (y-axis direction) in the first direction (x-axis direction), and a second-direction film 13 stretched and attached in the second direction (y-axis direction) between the pair of first-direction films 11 and 12 on the opposite side of the drawing direction of the positive electrode tab 313 and the negative electrode tab 323.

The second-direction film 13 may be divided and attached along the second direction (y-axis direction) between the pair of first-direction films 11 and 12. The second-direction film 13 may further include a film 14 between tabs attached between the positive electrode tab 313 and the negative electrode tab 323.

Among the first film member 10, the first-direction films 11 and 12 control and prevent the falling flow in both sides of the second direction (y-axis direction) of the electrode assembly 30, and the second-direction film 13 and the film 14 between the tabs control and prevent the falling flow in both sides of the first direction (x-axis direction) of the electrode assembly 30. Since the first film member 10 has adherence by the electrolyte solution, it may control and prevent the falling flow of the electrode assembly 30.

The second film member 20 may be attached to one outer surface or both outer surfaces of the electrode assembly 30 between the pair of first-direction films 11 and 12 and at one side of the second-direction film 13. The first film member 10 and the second film member 20 are closely adhered to the inner surface of the pouch 40.

Accordingly, the second film member 20 controls non-uniform flatness between the electrode assembly 30 and the pouch 40 by the first film member 10. The second film member 20 improves flatness between the first film member 10 and the surface of the electrode assembly 30, so the contact area between the first and second film members 10 and 20 and the pouch 40 may be improved.

The first film member 10 has a first thickness t1, and the second film member 20 has a second thickness t2, and they may be attached to both outer surfaces of the electrode assembly 30 (see FIG. 4). In this case, the first and second thicknesses t1 and t2 may be the same. In this case, the first and second thicknesses t1 and t2 may be 24 µm to 34 µm.

Although not separately shown, the first film member may have a first thickness, and the second film member may have a second thickness that is twice the first thickness, and they may be attached only to one of both surfaces of the electrode assembly. In this case, the first thickness t1 may be 24 µm to 34 µm, and the second thickness t2 may be 51 µm to 61 µm.

Referring back to FIG. 3, the first film member 10 (11, 12, 13, 14) has a first area A1, and the second film member 20 has a second area A2. The first area A1 may be 60 to 80% of the second area A2 [A1 =(0.6-0.8)*A2].

When the first area A1 is less than 60% of the second area A2, due to the lack of the first area A1 of the first film member 10, the both outer surfaces and the side surface of the electrode assembly 30 may not be sufficiently fixed, so that the falling flow may not be sufficiently controlled. When the first area A1 exceeds 80% of the second area A2, due to the excess of the first area A1 of the first film member 10, it may be difficult to attach the both outer surfaces and the side surface of the electrode assembly 30.

A change occurs in the entire thickness of the electrode assembly 30 before and after the pressurization formation of the rechargeable battery 1. A step change occurs according to the thickness change of the first film member 10 before and after the pressurization formation. The thickness change of the second film member 20 before and after pressurization formation absorbs the step change due to the thickness change of the first film member 10 before and after pressurization formation.

In the pressurization formation, charging and discharging proceeds while applying pressure to a plate against both sides of the rechargeable battery 1 so that the electrode assembly 30 may be uniformly charged and discharged under a flat condition.

That is, during the pressurization formation, the first electrode plate 31 (positive electrode plate) and the second electrode plate 32 (negative electrode plate) of the rechargeable battery 1 expand and contract. According to this charging and discharging, the electrode assembly 30 expands up to 15%.

In this case, the first film member 10 and the second film member 20 are expanded and controlled while receiving a pressing force. Therefore, the first film member 10 and the second film member 20 have an overall thickness of the same level without a thickness step.

For example, when the thickness of the electrode assembly 30 is 5.0 mm, the thickness increases to 5.750 mm during pressurization formation charging. That is, the thickness of the electrode assembly 30 becomes thicker by 750 µm.

In this case, the thickness steps between the first and second film members 10 and 20 are offset by each other, and the first and second film members 10 and 20 have the same level of overall thickness. Accordingly, the flatness of the surface of the rechargeable battery 1 is increased. Since the surface of the rechargeable battery 1 is subjected to a uniform pressure, adhesion between the first electrode plate 31, the separator 33, and the second electrode plate 32 is increased.

Hereinafter, various embodiments of the present disclosure will be described. Descriptions of configurations that are the same as the first embodiment or the configuration described above will be omitted, and descriptions of other configurations will be provided.

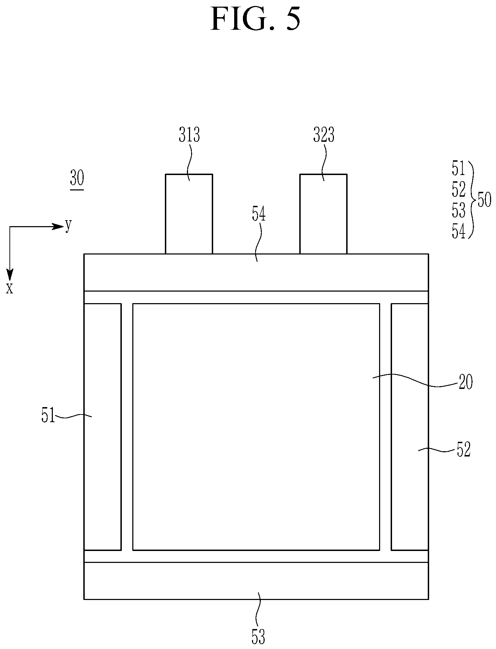

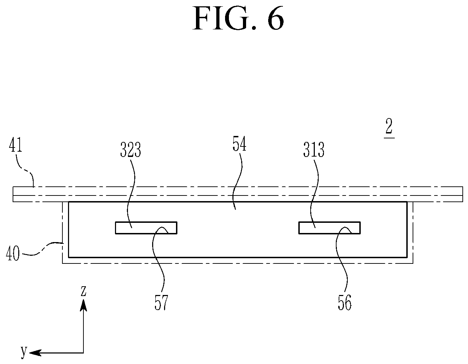

FIG. 5 illustrates a top plan view of an electrode assembly of a rechargeable battery according to a second embodiment of the present disclosure, and FIG. 6 illustrates a side view viewed from positive and negative tab sides of FIG. 5.

Referring to FIG. 5 and FIG. 6, in a rechargeable battery 2 of the second embodiment, a first film member 50 includes a pair of second-direction films 53 and 54 stretched and attached on both sides of the first direction (x-axis direction) of the electrode assembly 30 in the second direction (y-axis direction), and first-direction films 51 and 52 stretched and attached in the first direction (x-axis direction) between the pair of second-direction films 53 and 54.

Among the pair of second-direction films 53 and 54, the second direction films 54 on the positive electrode tab 313 and negative electrode tab 323 sides is provided with a pair of through-holes 56 and 57 for drawing out the positive electrode tab 313 and the negative electrode tab 323, respectively. The through-holes 56 and 57 allow the second-direction film 54 to be attached even when the positive electrode tab 313 and the negative electrode tab 323 are drawn out. Therefore, the second-direction film 54 stably controls and prevents the falling flow in one side of the first direction (x-axis direction).

The second-direction films 53 and 54 are entirely attached to both outer surfaces and side surfaces of the electrode assembly 30 in the second direction (y-axis direction). The second-direction films 53 and 54 may more effectively control and prevent the falling flow in one side in the first direction (x-axis direction) than the second-direction film 13 and the film 14 between the tabs of the first embodiment.

Referring back to FIG. 5, the first film member 50 (51, 52, 53, 54) has a first area A21, and the second film member 20 has a second area A22. The first area A21 may be 90 to 110% of the second area A22 [A21 =(0.9-1.1)*A22].

When the first area A21 is less than 90% of the second area A22, due to the lack of the first area A21 of the first film member 50, the both outer surfaces and the side surface of the electrode assembly 30 may not be sufficiently fixed, so that the falling flow may not be sufficiently controlled. When the first area A21 exceeds 110% of the second area A2, due to the excess of the first area A21 of the first film member 50, it may be difficult to attach the both outer surfaces and the side surface of the electrode assembly 30.

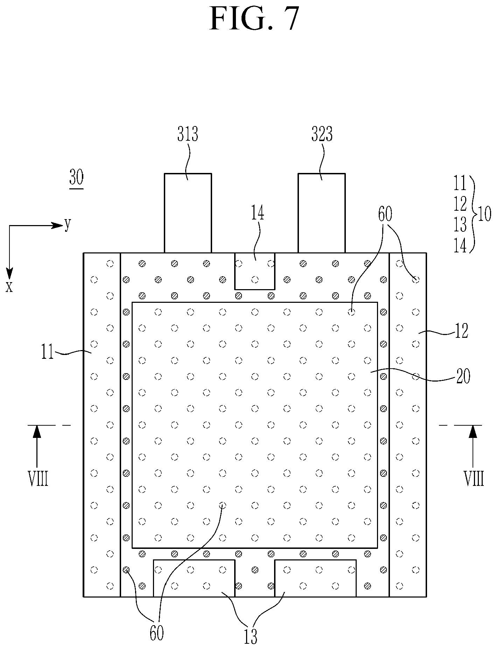

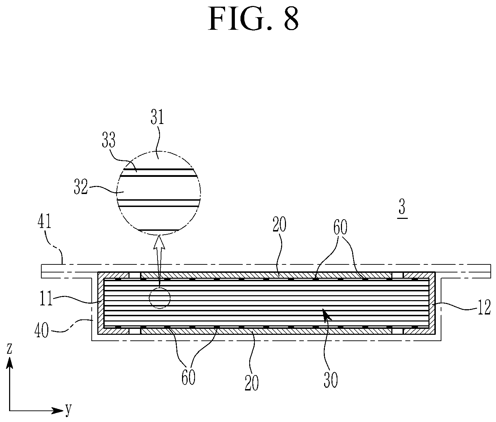

FIG. 7 illustrates a top plan view of an electrode assembly of a rechargeable battery according to a third embodiment of the present disclosure, and FIG. 8 illustrates a cross-sectional view taken along line VIII-VIII of FIG. 7.

Referring to FIG. 7 and FIG. 8, a rechargeable battery 3 of the third embodiment further includes a binder layer 60 applied to both outer surfaces of the electrode assembly 30. The first film member 10 and the second film member 20 are attached on the binder layer 60.

In the first embodiment, the first film member 10 and the second film member 20 are attached to both outer surfaces and the side surfaces of the outer periphery of the electrode assembly 30, but in the third embodiment, the first film member 10 and the second film member 20 are attached to the side surfaces of the outer periphery and both outer surfaces of the electrode assembly 30 as well as the binder layer 60.

The first film member 10 and the second film member 20 prevent compressed unevenness and a decrease in adhesive force between the separator 33 and the positive and negative electrode plates 31 and 32 that may occur between both outer surfaces of the electrode assembly 30 and the pouch 40 and the cover 41 due to the binder layer 60 during pressurization formation.

As an example, when the binder layer 60 is formed to have a thickness of 5 µm, a problem occurs due to lack of adhesion with the pouch during pressurization formation, and thus, distribution of falling flow characteristics and distribution of long lifespan characteristics may occur.

However, since the first film member 10 and the second film member 20 are further provided on the binder layer 60, adhesion with the pouch 40 and the cover 41 is secured even during pressurization formation, thereby balancing the falling flow characteristics and long lifespan characteristics.

While this disclosure has been described in connection with what is presently considered to be practical embodiments, it is to be understood that the disclosure is not limited to the disclosed embodiments, but, on the contrary, is intended to cover various modifications and equivalent arrangements included within the scope of the appended claims.

**<Description of Symbols>**

| | | | |
|---|---|---|---|
| 1, 2, 3: | rechargeable battery | 10: | first film member |
| 11, 12: | first-direction film | 13: | second-direction film |
| 14: | film between tabs | 20: | second film member |
| 30: | electrode assembly | | |
| 31: | first electrode plate (positive electrode plate) | | |
| 32: | second electrode plate (negative electrode plate) | | |
| 33: | separator | | |
| 40: | pouch | 41: | cover |
| 50: | first film member | 51, 52: | first-direction film |
| 53, 54: | second-direction film | 60: | binder layer |
| 311: | electrode current collecting plate | | |
| 312: | positive electrode active material layer | | |
| 313: | electrode tab (positive electrode tab) | | |
| 321: | electrode current collecting plate | | |
| 322: | negative active material layer | | |
| 323: | electrode tab (negative electrode tab) | | |
| 401: | polymer sheet | 402: | nylon sheet |
| 403: | aluminium sheet | A1, A21: | first area |
| A2, A22: | second area | t1: | first thickness |
| t2: | second thickness | | |

## Claims

1. A rechargeable battery comprising:
a stacked type electrode assembly in which a negative electrode plate and a positive electrode plate with electrode tabs are stacked on both surfaces of a separator;
a pouch that accommodates the electrode assembly;
a first film member that generates adhesive force through an electrolyte solution and is attached to the electrode assembly in a bent and connected state to both outer surfaces and side surfaces of an outer periphery of the electrode assembly; and
a second film member that is spaced apart from the first film member and attached to at least one of the both outer surfaces.

2. The rechargeable battery as claimed in claim 1, wherein
the first film member and the second film member are made of an oriented polystyrene film.

3. The rechargeable battery as claimed in claim 1 or claim 2, wherein
the negative electrode plate and the positive plate have a plane area in first and second directions crossing each other and are stacked in a third direction crossing the plane area;
the electrode tab is drawn out of the pouch along the first direction; and
the first film member is provided on both sides of the first direction and both sides of the second direction, respectively of the electrode assembly.

4. The rechargeable battery as claimed in claim 3, wherein
the first film member includes
a pair of first-direction films that are stretched and adhered on both sides of the second direction in the first direction, and
a second-direction film that is stretched and attached in the second direction between the pair of first direction films on a side opposite to a drawing direction of the electrode tab.

5. The rechargeable battery as claimed in claim 4, wherein
the second-direction film is divided and attached along the second direction between the pair of first-direction films.

6. The rechargeable battery as claimed in claim 5, wherein
the second-direction film further includes a film between tabs attached between the electrode tabs.

7. The rechargeable battery as claimed in any one of claims 4 to 6, wherein
the second film member is attached to at least one of the both outer surfaces, between the pair of first-direction films and on one side of the second-direction film, optionally wherein
the first film member and the second film member closely adhere to an inner surface of the pouch.

8. The rechargeable battery as claimed in any one of claims 1 to 7, wherein
the first film member has a first thickness, and
the second film member has a second thickness that is twice the first thickness and is attached to one of the both outer surface of the electrode assembly, optionally wherein
the first thickness is 24 µm to 34 µm, and the second thickness is 51 µm to 61 µm.

9. The rechargeable battery as claimed in any one of claims 1 to 7, wherein
the first film member has a first thickness, and
the second film member has the first thickness and is attached to the both outer surfaces of the electrode assembly.

10. The rechargeable battery as claimed in any one of claims 9 to 11, wherein
the first film member has a first area A1,
the second film member has a second area A2, and
the first area A1 is 60 to 80% of the second area A2 [A1 =(0.6-0.8)*A2].

11. The rechargeable battery as claimed in claim 3, wherein
the first film member includes
a pair of second-direction films that are stretched and adhered on both sides of the first direction of the electrode assembly in the second direction, and
a first-direction film that is stretched and attached in the first direction between the pair of second direction films.

12. The rechargeable battery as claimed in claim 11, wherein
among the pair of second-direction films, the second direction film on the electrode tab side is provided with a pair of through-holes through which the electrode tabs are respectively drawn out.

13. The rechargeable battery as claimed in claim 12, wherein
the pair of second-direction films are attached to the both outer surfaces and the side surfaces entirely in the second direction.

14. The rechargeable battery as claimed in any one of claims 11 to 13, wherein
the first film member has a first area A21,
the second film member has a second area A22, and
the first area A21 is 90 to 110% of the second area A22 [A21=(0.9-1.1)*A22].

15. The rechargeable battery as claimed in any one of claims 1 to 14, further comprising
a binder layer applied to the both outer surfaces of the electrode assembly,
wherein the first film member and the second film member are attached on the binder layer.
